(19) Europäisches Patentamt
European Patent Office
Office européen des brevets

(11) **EP 3 677 483 A1**

(12) **EUROPEAN PATENT APPLICATION**
published in accordance with Art. 153(4) EPC

(43) Date of publication:
08.07.2020 Bulletin 2020/28

(51) Int Cl.:
**B60W 20/00** (2016.01)   **B60W 20/12** (2016.01)

(21) Application number: 18860080.3

(22) Date of filing: 29.09.2018

(86) International application number:
PCT/CN2018/108540

(87) International publication number:
WO 2019/062882 (04.04.2019 Gazette 2019/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.09.2017 CN 201710911851

(71) Applicant: BYD Company Limited
Shenzhen, Guangdong 518118 (CN)

(72) Inventors:
• WANG, Chunsheng
Shenzhen
Guangdong 518118 (CN)
• GUO, Zhihao
Shenzhen
Guangdong 518118 (CN)
• XU, Boliang
Shenzhen
Guangdong 518118 (CN)
• HAO, Bin
Shenzhen
Guangdong 518118 (CN)

(74) Representative: Hoffmann Eitle
Patent- und Rechtsanwälte PartmbB
Arabellastraße 30
81925 München (DE)

(54) **HYBRID VEHICLE AND POWER CONSUMPTION CONTROL METHOD AND DEVICE THEREOF**

(57) This disclosure discloses a hybrid electric vehicle and a power consumption control method and apparatus thereof. The control method includes: obtaining a current slope, a current throttle depth, and a current operating power of power-consuming device of the hybrid electric vehicle, and determining a current power-consumption level of the hybrid electric vehicle according to the current slope, the current throttle depth, and the current operating power of the power-consuming device; obtaining a current power-generation level of the hybrid electric vehicle, where the hybrid electric vehicle has a plurality of power-generation levels and a plurality of power-consumption levels, and the plurality of power-generation levels respectively correspond to the plurality of power-consumption levels; and controlling a final power-consumption level of the hybrid electric vehicle according to the current power-consumption level and the current power-generation level, and controlling power consumption of the hybrid electric vehicle according to the final power-consumption level. Therefore, power consumption of a whole vehicle can be reduced in more comprehensive operating modes, comprehensive fuel consumption is reduced, and a power maintaining capacity can be enhanced.

FIG. 4

**Description**

**CROSS-REFERENCE TO RELATED APPLICATIONS**

This application claims priority to Chinese Patent Application Serial No. 201710911851.5, filed with the National Intellectual Property Administration, P. R. China on September 29, 2017. The entire content of the above-referenced application is incorporated herein by reference.

**FIELD**

This disclosure relates to the field of vehicle technologies, and in particular to a power consumption control method of a hybrid electric vehicle, a power consumption control apparatus of a hybrid electric vehicle, and a hybrid electric vehicle.

**BACKGROUND**

In power consumption policies of related hybrid power systems, a state of charge (SOC) value of a battery is usually used as a reference point for a change of a power consumption policy. For example, when the SOC value is greater than a preset electric quantity, an electric quantity of the battery is identified to be sufficient, and most power output is output by a motor, and when the SOC value is less than the preset electric quantity, the electric quantity is identified to be insufficient, and most power output is output by an engine.

However, problems existing in the related art are that because during power consumption for driving, only the SOC value is used as a standard, an engine may operate in a non-economic zone and increase fuel consumption, resulting in relatively high comprehensive fuel consumption of a whole vehicle. In addition, when the SOC value is relatively low, power consumption cannot be reduced to the largest extent, resulting in poor a power maintaining capacity of the whole vehicle.

**SUMMARY**

This disclosure aims at resolving at least one of the technical problems in the related art to some extent. Therefore, a first objective of this disclosure is to provide a power consumption control method of a hybrid electric vehicle, to reduce comprehensive fuel consumption and enhance a power maintaining capacity.

A second objective of this disclosure is to provide a power consumption control apparatus of a hybrid electric vehicle.

A third objective of this disclosure is to provide a hybrid electric vehicle.

To achieve the foregoing objectives, an embodiment of a first aspect of this disclosure provides a power consumption control method of a hybrid electric vehicle, including the following steps: obtaining a current slope, a current throttle depth, and a current operating power of power-consuming device of the hybrid electric vehicle, and determining a current power-consumption level of the hybrid electric vehicle according to the current slope, the current throttle depth, and the current operating power of the power-consuming device; obtaining a current power-generation level of the hybrid electric vehicle, where the hybrid electric vehicle has a plurality of power-generation levels and a plurality of power-consumption levels, and the plurality of power-generation levels respectively correspond to the plurality of power-consumption levels; and controlling a final power-consumption level of the hybrid electric vehicle according to the current power-consumption level and the current power-generation level, and controlling power consumption of the hybrid electric vehicle according to the final power-consumption level.

According to the power consumption control method of a hybrid electric vehicle provided by this embodiment of this disclosure, a current slope, a current throttle depth, and a current operating power of power-consuming device of the hybrid electric vehicle are obtained, a current power-consumption level of the hybrid electric vehicle is determined according to the current slope, the current throttle depth, and the current operating power of the power-consuming device, a current power-generation level of the hybrid electric vehicle is obtained, then a final power-consumption level of the hybrid electric vehicle is controlled according to the current power-consumption level and the current power-generation level, and power consumption of the hybrid electric vehicle is controlled according to the final power-consumption level. Hence, in the power consumption control method of this embodiment of this disclosure, the final power-consumption level is determined according to the current slope, the current throttle depth, the current power of the power-consuming device, and the current power-generation level of the hybrid electric vehicle, and then, the power-consuming device is adjusted according to the final power-consumption level, so that power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

To achieve the foregoing objectives, an embodiment of a second aspect of this disclosure provides a power consumption control apparatus of a hybrid electric vehicle, including a controller and a memory, where the memory stores a plurality of instructions, and the instructions are loadable and executable by the controller to: obtaining a current slope, a current throttle depth, and a current operating power of power-consuming device of the hybrid electric vehicle, and determining a current power-consumption level of the hybrid electric vehicle according to the current slope, the current throttle depth, and the current operating power of the power-consuming device; obtain a current power-generation level of the hybrid electric vehicle, control a final power-consumption level of the hybrid electric vehicle according to the current power-consumption level and the current power-generation level, and control power consumption of the hybrid electric vehicle according to the final power-consumption level, where the hybrid electric vehicle has a plurality of power-generation levels and a plurality of power-consumption levels, and the plurality of power-generation levels respectively correspond to the plurality of power-consumption levels.

According to the power consumption control apparatus of a hybrid electric vehicle provided by this embodiment of this disclosure, a current slope, a current throttle depth, and a current operating power of power-consuming device of the hybrid electric vehicle are obtained, a current power-consumption level of the hybrid electric vehicle is determined according to the current slope, the current throttle depth, and the current operating power of the power-consuming device, a current power-generation level of the hybrid electric vehicle is obtained, then a final power-consumption level of the hybrid electric vehicle is controlled according to the current power-consumption level and the current power-generation level, and power consumption of the hybrid electric vehicle is controlled according to the final power-consumption level, where the hybrid electric vehicle has a plurality of power-generation levels and a plurality of power-consumption levels, and the plurality of power-generation levels respectively correspond to the plurality of power-consumption levels. Hence, in the power consumption control apparatus of a hybrid electric vehicle of this embodiment of this disclosure, the final power-consumption level is determined according to the current slope, the current throttle depth, the current power of the power-consuming device, and the current power-generation level of the hybrid electric vehicle, and then, the power-consuming device is adjusted according to the final power-consumption level, so that power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

To achieve the foregoing objectives, an embodiment of a third aspect of this disclosure provides a hybrid electric vehicle, including the power consumption control apparatus of a hybrid electric vehicle.

According to the hybrid electric vehicle of this embodiment of this disclosure, through the power consumption control apparatus of the hybrid electric vehicle, power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

## BRIEF DESCRIPTION OF THE DRAWINGS

Fig. 1 is a schematic block diagram of a hybrid electric vehicle according to an embodiment of this disclosure;
Fig. 2a is a schematic structural diagram of a power system of a hybrid electric vehicle according to an embodiment of this disclosure;
Fig. 2b is a schematic structural diagram of a power system of a hybrid electric vehicle according to another embodiment of this disclosure;
Fig. 3 is a schematic block diagram of a power system of a hybrid electric vehicle according to another embodiment of this disclosure;
Fig. 4 is a flowchart of a power consumption control method of a hybrid electric vehicle according to an embodiment of this disclosure;
Fig. 5 is a schematic block diagram of a power consumption control apparatus of a hybrid electric vehicle according to an embodiment of this disclosure; and
Fig. 6 is a schematic block diagram of a hybrid electric vehicle according to an embodiment of this disclosure.

## DETAILED DESCRIPTION

Embodiments of this disclosure are described below in detail, and examples of the embodiments are shown in the accompanying drawings, where the same or similar elements and the elements having same or similar functions are denoted by the same or similar reference numerals throughout the descriptions. The embodiments described below with reference to the accompanying drawings are exemplary and used for explaining this disclosure, and should not be construed as a limitation on this disclosure.

A power consumption control method of a hybrid electric vehicle, a power system of a hybrid electric vehicle, and a hybrid electric vehicle of the embodiments of this disclosure are described below with reference to accompanying drawings.

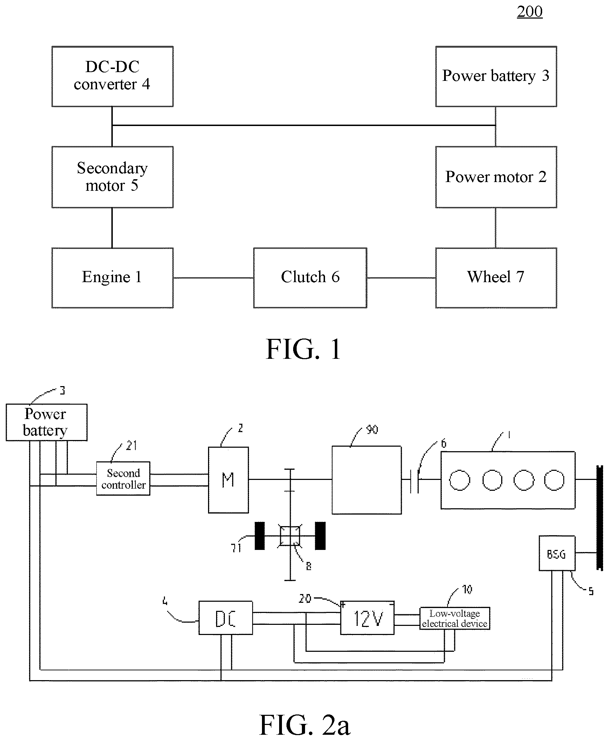

According to embodiments of Fig. 1 to Fig. 3, a power system 200 of the hybrid electric vehicle includes: an engine 1, a power motor 2, a power battery 3, a DC-DC converter 4, and a secondary motor 5.

As shown in Fig. 1 to Fig. 3, the engine 1 is configured to output power to a wheel 7 of the hybrid electric vehicle through a clutch 6; and the power motor 2 is configured to output driving power to a wheel 7 of the hybrid electric vehicle. That is, the power system in this embodiment of the present invention can provide power for normally traveling of the hybrid electric vehicle through the engine 1 and/or the power motor 2. In some embodiments of this disclosure, a power source of the power system 200 may be the engine 1 and the power motor 2. That is, either of the engine 1 and power motor 2 can individually output power to the wheel 7, or the engine 1 and the power motor 2 can output power to the wheel 7 together.

The power battery 3 is configured to supply power to the power motor 2. The secondary motor 5 is connected to the engine 1. For example, the secondary motor 5 may be connected to the engine 1 through a wheel train end of the engine 1. The secondary motor 5 is connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4. In other words, the engine 1 may actuate the secondary motor 5 to generate power, and electric energy generated by the secondary motor 5 may be provided to at least one of the power battery 3, the power motor 2, and the DC-DC converter 4. It should be understood that the engine 1 may actuate the secondary motor 5 to generate power while outputting power to the wheel 7, or may separately actuate the secondary motor 5 to generate power.

Therefore, the power motor 2 and the secondary motor 5 respectively and correspondingly serve as a driving motor and a generator. Because the secondary motor 5 may also have a relatively high generating power and relatively high generating efficiency at a low speed, a power demand of low-speed traveling can be satisfied, low-speed electric balance and low-speed smoothness of the whole vehicle can be maintained, and performance of the whole vehicle can be improved.

In some embodiments, the secondary motor 5 may be a Belt-driven Starter Generator (BSG) motor. It should be noted that the secondary motor 5 is a high-voltage motor. For example, a generating voltage of the secondary motor 5 is equivalent to a voltage of the power battery 3, so that the electric energy generated by the secondary motor 5 can be directly used to charge the power battery 3 without being subjected to voltage conversion, or may be directly supplied to the power motor 2 and/or the DC-DC converter 4. In addition, the secondary motor 5 is also a high-efficiency generator. For example, when the engine 1 actuates the secondary motor 5 at an idle revolution speed to generate power, generating efficiency of 97% or above can be achieved, so that normal generating efficiency is improved.

In addition, in some embodiments of this disclosure, the secondary motor 5 may be configured to start the engine 1. That is, the secondary motor 5 may have a function of starting the engine 1. For example, when starting the engine 1, the secondary motor 5 may actuate a crankshaft of the actuate engine 1 to rotate, to enable a piston of the engine 1 to arrive at an ignition position, so as to start the engine 1. Therefore, the secondary motor 5 may implement a function of a starter in the related art.

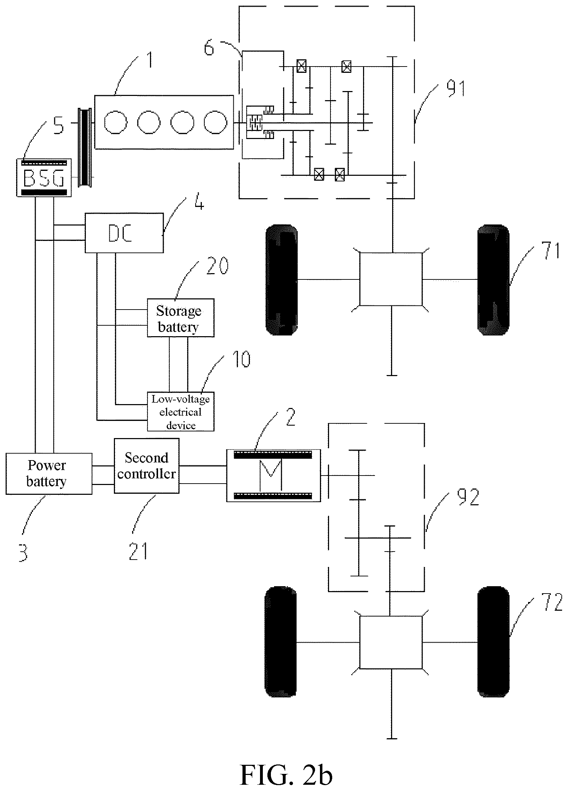

As stated above, the engine 1 and the power motor 2 can both be configured to drive the wheel 7 of the hybrid electric vehicle. For example, as shown in Fig. 2a, the engine 1 and the power motor 2 drive a same wheel, for example, a pair of front wheels 71 (including a left front wheel and a right front wheel), of the hybrid electric vehicle together. For another example, as shown in Fig. 2b, the engine 1 may drive a first wheel, for example, the pair of front wheels 71 (including a left front wheel and a right front wheel), of the hybrid electric vehicle, and the power motor 2 may output driving power to a second wheel, for example, a pair of rear wheels 72 (including a left rear wheel and a right rear wheel), of the hybrid electric vehicle.

When the engine 1 and the power motor 2 drive the pair of front wheels 71 together, driving power of the power system 200 is output to the pair of front wheels 71, and the whole vehicle may use a two wheel drive mode; and when the engine 1 drives the pair of front wheels 71, and the power motor 2 drives the pair of rear wheels 72, driving power of the power system 200 is separately output to the pair of front wheels 71 and the pair of rear wheels 72, and the whole vehicle may use a four wheel drive mode.

When the engine 1 and the power motor 2 drive a same wheel together, with reference to Fig. 2a, the power system 200 of the hybrid electric vehicle further includes a main reducer 8 and a transmission 90. The engine 1 outputs power to the first wheel, for example, the pair of front wheels 71, of the hybrid electric vehicle through the clutch 6, the transmission 90, and the main reducer 8. The power motor 2 outputs driving power to the first wheel, for example, the pair of front wheels 71, of the hybrid electric vehicle through the main reducer 8. The clutch 6 and the transmission 90 may be integrally disposed.

When the engine 1 drives the first wheel, and the power motor 2 drives the second wheel, with reference to Fig. 2b, the power system 200 of the hybrid electric vehicle further includes a first transmission 91 and a second transmission 92. The engine 1 outputs power to the first wheel, for example, the pair of front wheels 71, of the hybrid electric vehicle through the clutch 6 and the first transmission 91. The power motor 2 outputs driving power to the second wheel, for example, the pair of rear wheels 72, of the hybrid electric vehicle through the second transmission 92. The clutch 6 and the first transmission 91 may be integrally disposed.

In some embodiments of this disclosure, as shown in Fig. 1 to Fig. 3, the secondary motor 5 further includes a first controller 51, and the power motor 2 further includes a second controller 21. The secondary motor 5 is connected to the power battery 3 and the DC-DC converter 4 separately through the first controller 51, and is connected to the power motor 2 through the first controller 51 and the second controller 21.

Specifically, the first controller 51 is connected to the second controller 21, the power battery 3, and the DC-DC converter 4 separately. The first controller 51 may include an AC-DC conversion unit. When generating power, the secondary motor 5 may generate an alternating current. The AC-DC conversion unit may convert the alternating current generated by a high-voltage motor 2 through power generation into a high-voltage direct current, for example, a 600 V high-voltage direct current, to perform at least one of charging the power battery 3, supplying power to the power motor 2, and supplying power to the DC-DC converter 4.

The second controller 21 may include a DC-AC conversion unit. The first controller 51 may convert an alternating current generated by the secondary motor 5 through power generation into a high-voltage direct current. The DC-AC conversion unit may further convert the high-voltage direct current converted by the first controller 51 to an alternating current, to supply power to the power motor 2.

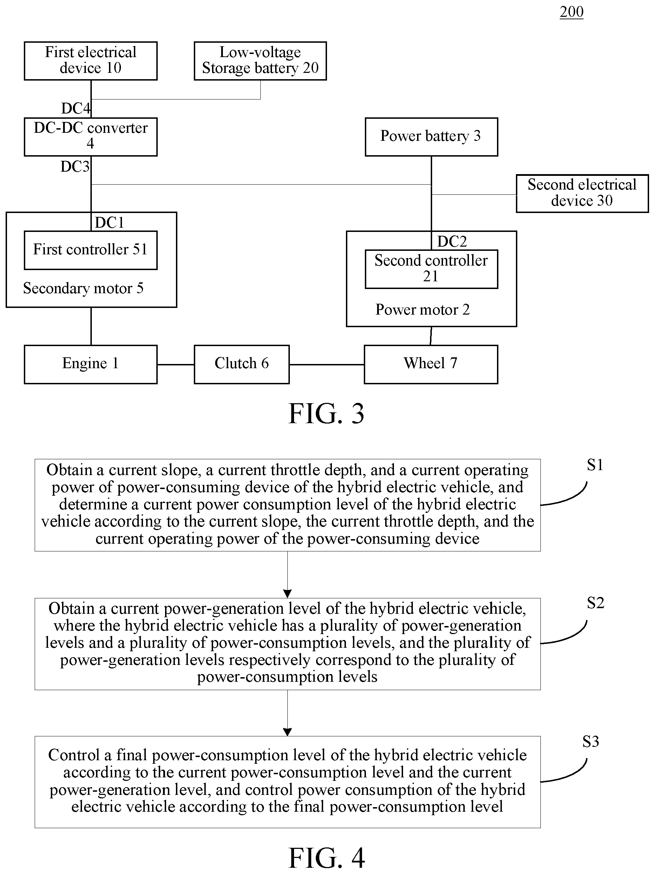

As shown in Fig. 3, when generating power, the secondary motor 5 may charge the power battery 3 and/or supply power to the DC-DC converter 4 through the first controller 51. In addition, the secondary motor 5 may further supply power to the power motor 2 through the first controller 51 and the second controller 21.

As shown in Fig. 1 to Fig. 3, the DC-DC converter 4 is further connected to the power battery 3. The DC-DC converter 4 is further connected to the power motor 2 through the second controller 21.

In some embodiments, as shown in Fig. 3, the first controller 51 has a first direct current end DC1, the second controller 21 has a second direct current end DC2, and the DC-DC converter 4 has a third direct current end DC3. The third direct current end DC3 of the DC-DC converter 4 may be connected to the first direct current end DC1 of the first controller 51, to perform DC-DC conversion on the high-voltage direct current output by the first controller 51 through the first direct current end DC1. In addition, the third direct current end DC3 of the DC-DC converter 4 may alternatively be connected to the power battery 3, and further, the first direct current end DC1 of the first controller 51 may be connected to the power battery 3, so that the first controller 51 outputs the high-voltage direct current to the power battery 3 through the first direct current end DC1 to charge the power battery 3. Further, the third direct current end DC3 of the DC-DC converter 4 may alternatively be connected to the second direct current end DC2 of the second controller 21, and further, the first direct current end DC1 of the first controller 51 may be connected to the second direct current end DC2 of the second controller 21, so that the first controller 51 outputs the high-voltage direct current to the second controller 21 through the first direct current end DC1 to supply power to the power motor 2.

As shown in Fig. 3, the DC-DC converter 4 is further connected to a first electrical device 10 and a low-voltage storage battery 20 in the hybrid electric vehicle to supply power to the first electrical device 10 and the low-voltage storage battery 20, and the low-voltage storage battery 20 is further connected to the first electrical device 10.

In some embodiments, as shown in Fig. 3, the DC-DC converter 4 further includes a fourth direct current end DC4. The DC-DC converter 4 may convert the high-voltage direct current output by the power battery 3 and/or the high-voltage direct current output by the secondary motor 5 through the first controller 51 into a low-voltage direct current, and output the low-voltage direct current through the fourth direct current end DC4. Further, the fourth direct current end DC4 of the DC-DC converter 4 may be connected to the first electrical device 10, to supply power to the first electrical device 10. The first electrical device 10 may be a low-voltage electrical device, which includes, but is not limited to, a vehicle light, a radio, and the like. The fourth direct current end DC4 of the DC-DC converter 4 may be further connected to the low-voltage storage battery 20, to supply power to the low-voltage storage battery 20.

In addition, the low-voltage storage battery 20 is connected to the first electrical device 10, to supply power to the first electrical device 10. Particularly, when the secondary motor 5 stops generating power, and the power battery 3 is faulty or has an insufficient electricity quantity, the low-voltage storage battery 20 may supply power to the first electrical device 10, to ensure low-voltage power consumption of the whole vehicle, ensure that the whole vehicle can implement traveling in a pure fuel mode, and increase a traveling distance of the whole vehicle.

As stated above, the third direct current end DC3 of the DC-DC converter 4 is connected to the first controller 51, and the fourth direct current end DC4 of the DC-DC converter 4 is connected to the first electrical device 10 and the low-voltage storage battery 20 separately. When the power motor 2, the second controller 21, and the power battery 3 are faulty, the secondary motor 5 may generate power to supply power to the first electrical device 10 and/or charge the low-voltage storage battery 20 through the first controller 51 and the DC-DC converter 4, to enable the hybrid electric vehicle to travel in a pure-fuel mode.

When the power motor 2, the second controller 21, and the power battery 3 are faulty, the first controller 51 may convert an alternating current generated by the secondary motor 5 during power generation into a high-voltage direct current, the DC-DC converter 4 may convert the high-voltage direct current converted by the first controller 50 into a low-voltage direct current, to supply power to the first electrical device 10 and/or charge low-voltage storage battery 20.

Therefore, the secondary motor 5 and the DC-DC converter 4 have a single power supply channel. When the power motor 2, the second controller 21, and the power battery 3 are faulty, electric driving cannot be implemented. In this case, low-voltage power consumption of the whole vehicle can be ensured through the single power supply channel of the secondary motor 5 and the DC-DC converter 4, to ensure low-voltage power consumption of the whole vehicle, ensure that the whole vehicle can implement traveling in a pure fuel mode, and increase a traveling distance of the whole vehicle.

With reference to the embodiment of Fig. 3, the first controller 51, the second controller 21, and the power battery 3 are further separately connected to a second electrical device 30 of the hybrid electric vehicle.

In some embodiments, as shown in Fig. 3, the first direct current end DC1 of the first controller 51 may be connected to the second electrical device 30, and when generating power, the secondary motor 5 may directly supply power to the second electrical device 30 through the first controller 51. In other words, the AC-DC conversion unit of the first controller 51 may further convert an alternating current generated by the secondary motor 5 during power generation into a high-voltage direct current, and directly supply power to the second electrical device 30.

Similarly, the power battery 3 may be further connected to the second electrical device 30, to supply power to the second electrical device 30. That is, the high-voltage direct current output by the power battery 3 may be directly supplied to the second electrical device 30.

The second electrical device 30 may be a high-voltage electrical device, which includes, but is not limited to, an air conditioner compressor, a Positive Temperature Coefficient (PTC) heater, and the like.

As stated above, charging the power battery 3, supplying power to the power motor 2, or supplying power to the first electrical device 10 and the second electrical device 30 may be implemented through power generation of the secondary motor 5. In addition, the power battery 3 may supply power to the power motor 2 through the second controller 21, or supply power to the second electrical device 30, or supply power to the first electrical device 10 and/or low-voltage storage battery 20 through the DC-DC converter 4. Therefore, power supply modes of the whole vehicle are enriched, power demands of the whole vehicle under different working conditions are satisfied, and performance of the whole vehicle is improved.

It should be noted that in this embodiment of this disclosure, a low voltage may refer to a voltage ranging from 12 V (volt) to 24 V, and a high voltage may refer to a voltage of 600 V, but is not limited thereto.

Therefore, in the power system of a hybrid electric vehicle according to this embodiment of the present invention, the engine can be prevented from participating in driving at a low speed, and further, the clutch is not used, thereby reducing wear or slipping wear of the clutch while reducing jerks and improving comfort. In addition, the engine can operate in an economic zone at a low speed, only generate power, and do not perform driving, thereby reducing fuel consumption, reducing engine noise, maintaining low-speed electric balance and low-speed smoothness of the whole vehicle, and improving performance of the whole vehicle. In addition, the secondary motor can directly charge the power battery, may also supply power to a low-voltage device such as the low-voltage storage battery and the first electrical device, and may also be used as a starter.

Based on the foregoing structure of the power system of the hybrid electric vehicle, the embodiments of this disclosure further provide a power consumption control method of a hybrid electric vehicle.

Fig. 4 is a flowchart of a power consumption control method of a hybrid electric vehicle according to an embodiment of this disclosure. As shown in Fig. 4, the power consumption control method of a hybrid electric vehicle of this embodiment of this disclosure includes the following steps

S1: Obtain a current slope, a current throttle depth, and a current operating power of power-consuming device of the hybrid electric vehicle, and determine a current power consumption level of the hybrid electric vehicle according to the current slope, the current throttle depth, and the current operating power of the power-consuming device.

It should be noted that, the slope may be a ratio of a vertical height of a slope to a horizontal length of the slope, the throttle depth is a depth at which a throttle pedal is depressed, and the current operating power of the power-consuming device is a current total power of all power-consuming devices. The power-consuming device may be an air conditioner, a radio, or the like.

S2: Obtain a current power-generation level of the hybrid electric vehicle, where the hybrid electric vehicle has a plurality of power-generation levels and a plurality of power-consumption levels, and the plurality of power-generation levels respectively correspond to the plurality of power-consumption levels.

In a specific embodiment of this disclosure, the power-generation level may be divided into three power-generation levels, namely, a high power power-generation level, a moderate power power-generation level, and a high power power-generation level, and similarly, the power-consumption level may also be divided into three power-consumption levels, namely, a maximum power-consumption level, a standard power-consumption level, and an economic power-consumption level, where the high power power-generation level corresponds to the maximum power-consumption level, that is, the high power power-generation level and the maximum power-consumption level are a same level, the moderate power power-generation level corresponds to the standard power-consumption level, that is, the moderate power power-generation level and the standard power-consumption level are a same level, and the high power power-generation level corresponds to economic power-consumption level, that is, the moderate power power-generation level and the standard power-consumption level are a same level. In addition, the maximum power-consumption level is higher than the standard power-consumption level, and the standard power-consumption level is higher than the economic power-consumption level. Similarly, the high power power-generation level is higher than the moderate power power-generation level, and the moderate power power-generation level is higher than the high power power-generation level.

S3: Control a final power-consumption level of the hybrid electric vehicle according to the current power-consumption level and the current power-generation level, and control power consumption of the hybrid electric vehicle according to the final power-consumption level.

Therefore, the final power-consumption level is determined by detecting the current slope, the current throttle depth, the current operating power of the power-consuming device, and a power generation capacity of the whole vehicle, and power consumption of the hybrid electric vehicle is controlled according to the final power-consumption level, so that during driving, the power generator is enabled to operate in an economic zone as much as possible, thereby low comprehensive fuel consumption.

According to an embodiment of this disclosure, the determining a current power-consumption level of the hybrid electric vehicle according to the current slope, the current throttle depth, and the current operating power of the power-consuming device includes: obtaining a slope interval to which the current slope belongs, and obtaining a slope power-consumption level corresponding to the slope interval to which the current slope belongs; obtaining a throttle-depth interval to which the current throttle depth belongs, and obtaining a throttle-depth power-consumption level corresponding to the throttle-depth interval to which the current throttle depth belongs; obtaining a power interval to which the current operating power of the power-consuming device belongs, and obtaining a power power-consumption level corresponding to the power interval to which the current operating power of the power-consuming device belongs; and using a highest level in the slope power-consumption level, the throttle-depth power-consumption level, and the power power-consumption level as the current power-consumption level.

The slope is positively correlated to a target slope power-consumption level. That is, if the target slope power-consumption level is higher, a slope in a corresponding slope interval is higher. The throttle depth is positively correlated to a target throttle-depth power-consumption level. That is, if the target throttle-depth power-consumption level is higher, a throttle depth in a corresponding throttle-depth interval is higher. The operating power of the power-consuming device is positively correlated to a target power power-consumption level. That is, if the target power power-consumption level is higher, an operating power of a power-consuming device in a corresponding power interval is higher.

That is, as shown in Table 1, the current power-consumption level may be determined from three dimensions, namely, the current slope, the current throttle depth, and the current operating power of the power-consuming device. Specifically, each of the slope, the throttle depth, and the operating power of the power-consuming device of the hybrid electric vehicle is divided into three intervals. The three intervals respectively correspond to the maximum power-consumption level, the standard power-consumption level, the economic power-consumption level. That is, three slope intervals respectively correspond to a maximum slope power-consumption level, a standard slope power-consumption level, and an economic slope power-consumption level. Three throttle-depth intervals respectively correspond to a maximum throttle-depth power-consumption level, a standard throttle-depth power-consumption level, and an economic throttle-depth power-consumption level. Three power intervals respectively correspond to a maximum power power-consumption level, a standard power power-consumption level, and an economic power power-consumption level. The maximum power-consumption level is higher than the standard power-consumption level, and the standard power-consumption level is higher than the economic power-consumption level.

Table 1

| Dimension / Power-consumption level | Current slope | Current throttle depth | Current operating power of a power-consuming device |
|---|---|---|---|
| Maximum power-consumption | Greater than A1% | Greater than B1% | Greater than C1 kw |
| level | | | |
| Standard power-consumption level | Greater than or equal to A2% and less than or equal to A1% | Greater than B2% less than or equal to B1% | Greater than or equal to C2 kw and less than or equal to C1 kw |
| Economic power-consumption level | Greater than 0 and less than A2% | Greater than 0 and less than or equal to B2% | Less than C2 kw |

Specifically, as shown in Table 1, the slope of the hybrid electric vehicle may be divided into a first slope interval, a second slope interval, and a third slope interval. The first slope interval is greater than A1%, the second slope interval is greater than or equal to A2% and less than or equal to A1%, and the third slope interval is greater than 0 and less than A2%. When a current slope is greater than A1%, it is determined that the current slope belongs to the first slope interval, and a slope power-consumption level corresponding to the first slope interval is the maximum power-consumption level; when the current slope is greater than or equal to A2% and less than or equal to A1%, it is determined that the current slope belongs to the second slope interval, and a slope power-consumption level corresponding to the second slope interval is the standard power-consumption level; and when the current slope is greater than 0 and less than A2%, it is determined that the current slope belongs to the third slope interval, and a slope power-consumption level corresponding to the third slope interval is the economic power-consumption level, where A1>A2>0.

The throttle depth of the hybrid electric vehicle may be divided into a first depth interval, a second depth interval, and a third depth interval. The first depth interval is greater than B1%, the second depth interval is greater than B2% and less than or equal to B1%, and the third depth interval is greater than 0 and less than or equal to B2%. When the current throttle depth is greater than B1%, it is determined that the current throttle depth belongs to the first throttle-depth interval, and a throttle-depth power-consumption level corresponding to the first throttle-depth interval is the maximum power-consumption level; when the current throttle depth is greater than B2% and less than or equal to B1%, it is determined that the current throttle depth belongs to the second throttle-depth interval, and a throttle-depth power-consumption level corresponding to the second throttle-depth interval is the standard power-consumption level; and when the current throttle depth is greater than 0 and less than or equal to B2%, it is determined that the current throttle depth belongs to the third throttle-depth interval, and a throttle-depth power-consumption level corresponding to the third throttle-depth interval is the economic power-consumption level, where B1>B2>0.

The current operating power of the power-consuming device of the hybrid electric vehicle is divided into a first power interval, a second power interval, and a third power interval. The first power interval is greater than C1 kw, the second power interval is greater than or equal to C2 kw and less than or equal to C1 kw, and the third power interval is less than C2 kw. When the current operating power of the power-consuming device is greater than C1 kw, it is determined that the current operating power belongs to the first power interval, and a power power-consumption level corresponding to the first power interval is the maximum power-consumption level; when the current operating power is greater than or equal to C2 kw and less than or equal to C1 kw, it is determined that the current operating power belongs to the second power interval, and a power power-consumption level corresponding to the second power interval is the standard power-consumption level; and when the current operating power is less than C2 kw, it is determined that the current operating power belongs to the third power interval, and a power power-consumption level corresponding to the third power interval is the economic power-consumption level third power interval, where C1>C2>0.

Further, after the slope power-consumption level, the throttle-depth power-consumption level, and the power power-consumption level are individually determined according to the current slope, the current throttle depth, and the current operating power of the power-consuming device, the current power-consumption level may be determined in a descending sequence of priority of the maximum power-consumption level, the standard power-consumption level, the economic power-consumption level. That is, a highest level in the slope power-consumption level, the throttle-depth power-consumption level, and the power power-consumption level is used as the current power-consumption level.

That is, if any power-consumption level in the slope power-consumption level, the throttle-depth power-consumption level, and the power power-consumption level is a maximum power-consumption level, the current power-consumption level is the maximum power-consumption level, if there is no maximum power-consumption level, but there is at least one standard power-consumption level, the current power-consumption level is the standard power-consumption level, if there is no maximum power-consumption level or standard power-consumption level, but there is at least one economic power-consumption level, the current power-consumption level is the economic power-consumption level.

According to an embodiment of this disclosure, when the current power-generation level is lower than the current power-consumption level, and the current power-consumption level is inconsistent with the slope power-consumption level, a power-consumption level corresponding to the current power-generation level is used as the final power-consumption level.

That is, when the current power-generation level is lower than current power-consumption level, if the current power-consumption level is inconsistent with the slope power-consumption level, that is, the slope power-consumption level is not a highest power-consumption level in the slope power-consumption level, the throttle-depth power-consumption level, and the power power-consumption level, the current power-consumption level of the whole vehicle is reduced to a priority of the current power-generation level, that is, the current power-generation level limits an upper limit of the current power-consumption level. In other words, when the current power-consumption level is determined from the slope power-consumption level, the power generation capacity of the whole vehicle limits power consumption of the whole vehicle. For example, if the current power-generation level is the moderate power power-generation level and the maximum power-consumption level, and at this time, the slope power-consumption level is either the standard power-consumption level or the economic power-consumption level, the current power-consumption level is not determined from the slope power-consumption level, and the final power-consumption level is the standard power-consumption level corresponding to the moderate power power-generation level.

Further, when the current power-generation level is lower than the current power-consumption level, and the current power-consumption level is consistent with the slope power-consumption level, the slope power-consumption level is used as the final power-consumption level.

That is, when the current power-generation level is lower than current power-consumption level, if the slope power-consumption level is a highest power-consumption level in the slope power-consumption level, the throttle-depth power-consumption level, and the power power-consumption level, the slope power-consumption level, that is, the current power-consumption level, is the final power-consumption level. In other words, when the current power-consumption level is determined from the slope power-consumption level, the power generation capacity of the whole vehicle is no longer a factor restricting a power-consumption level, and the slope power-consumption level is directly used as the final power-consumption level.

According to an embodiment of this disclosure, when the current power-generation level is higher than or equal to the current power-consumption level, the current power-generation level is used as the final power-consumption level.

Table 2

| Power-consumption level / Power-generation level | Maximum power-consumption level | Standard power-consumption level | Economic power-consumption level |
|---|---|---|---|
| High power power-generation level | Maximum power-consumption level | Standard power-consumption level | Economic power-consumption level |
| Moderate power power-generation level | Standard power-consumption level | Standard power-consumption level | Economic power-consumption level |
| Low power power-generation level | Economic power-consumption level | Economic power-consumption level | Economic power-consumption level |

That is, when the current power-generation level is not the same as the current power-consumption level, in an ordinary case, as shown in Table 2, the final power-consumption level may be determined according to a lower level in the current power-generation level and the current power-consumption level. For example, when the current power-generation level is the moderate power power-generation level, and the current power-consumption level is the maximum power-consumption level, it is determined that the final power-consumption level is the standard power-consumption level. For another example, when the current power-generation level is the high power power-generation level, and the current power-consumption level is the standard power-consumption level, it is determined that the final power-consumption level is the standard power-consumption level. In a special case, when the slope power-consumption level is the highest power-consumption level, the slope power-consumption level is used as the final power-consumption level.

Therefore, an operating mode can be determined more comprehensively, during driving, an engine can be enabled to operate in an economic zone as much as possible, thereby reducing comprehensive fuel consumption, and when an electric quantity is insufficient, power consumption of the whole vehicle is reduced, and a power maintaining capacity can be enhanced.

According to an embodiment of this disclosure, the controlling power consumption of the hybrid electric vehicle according to the final power-consumption level includes: selecting a corresponding throttle depth-target motor torque curve according to the final power-consumption level, where the hybrid electric vehicle has a plurality of throttle depth-target motor torque curves, and the plurality of power-consumption levels respectively correspond to the plurality of throttle depth-target motor torque curves; and obtaining a current target motor torque according to the current throttle depth and a corresponding throttle depth-target motor torque curve, and controlling an output torque of a power motor of the hybrid electric vehicle according to the current target motor torque.

Proportions of the target motor torques of the plurality of throttle depth-target motor torque curves to a total driving torque at a same throttle depth gradually decrease according to a descending order of the plurality of power-consumption levels.

Specifically, the plurality of power-consumption levels respectively correspond to the plurality of throttle depth-target motor torque curves. That is, the plurality of throttle depth-target motor torque curves can be calibrated according to the plurality of power-consumption levels. More specifically, three throttle depth-target motor torque curves may be calibrated respectively according to the maximum power-consumption level, the standard power-consumption level, and the economic power-consumption level. When the throttle depths are the same, a total driving torque m is a fixed value. On the maximum power-consumption level, a proportion of a target motor torque n to the total driving torque m is a1%. On the standard power-consumption level, a proportion of the target motor torque n to the total driving torque m is a2%, and on economic power-consumption level, a proportion of the target motor torque n to the total driving torque m is a3%, where a1>a2>a3.

Specifically, a corresponding throttle depth-target motor torque curve may be selected according to the final power-consumption level. For example, when the final power-consumption level is the maximum power-consumption level, a first throttle depth-target motor torque curve is selected, when the final power-consumption level is the standard power-consumption level, a second throttle depth-target motor torque curve is selected, and when the final power-consumption level is the economic power-consumption level, a third throttle depth-target motor torque curve is selected. Subsequently, a current target motor torque is obtained according to the current throttle depth and a corresponding throttle depth-target motor torque curve, and an output torque of a power motor of the hybrid electric vehicle is controlled according to the current target motor torque.

Therefore, on the low power-consumption level, output of a driving torque of a motor is reduced, so that power maintaining performance is enhanced while satisfying a power demand.

According to an embodiment of this disclosure, the controlling power consumption of the hybrid electric vehicle according to the final power-consumption level includes: obtaining a lowest power consumption power and a rated power consumption power of the power-consuming device; obtaining a bias power according to a difference between the rated power consumption power and the lowest power consumption power; selecting a corresponding power coefficient according to the final power-consumption level, where the hybrid electric vehicle has a plurality of power coefficients, and the plurality of power-consumption levels respectively correspond to the plurality of power coefficients; and adjusting an operating power of the power-consuming device according to the rated power consumption power, the bias power, and the corresponding power coefficient.

Specifically, the operating power of the power-consuming device is adjusted according to the following formula:

$$P = P2 - a \times \triangle P$$

where P is an adjusted operating power of the power-consuming device, P2 is the rated power consumption power, a is the power coefficient, and $\triangle P$ is the bias power. The plurality of power coefficients gradually increase according to a descending order of the plurality of power-consumption levels.

It should be noted that, the bias power is a difference between the rated power consumption power P2 and a lowest power consumption power PI, that is, $\Delta P=P2-P1$.

Specifically, the plurality of power coefficients can be calibrated according to the plurality of power-consumption levels. More specifically, three power coefficients may be respectively calibrated according to the maximum power-consumption level, the standard power-consumption level, and the economic power-consumption level. That is, a may be 0, 0.5, and 1 separately. On the maximum power-consumption level, a is 0, and in this case, the operating power of the power-consuming device is P=P2. That is, the operating power of the power-consuming device P is the rated power consumption power P2. On the standard power-consumption level, a is 0.5, and the operating power of the power-consuming device is $P=P2-0.5\times\Delta P$. On the economic power-consumption level, a is 1, and the operating power of the power-consuming device is $P=P2-1\times\Delta P=P1$. That is, the operating power of the power-consuming device P is the lowest power consumption power P1.

That is, the final power-consumption levels and the power coefficients have a one-to-one correspondence. That is, power consumption of the hybrid electric vehicle can be controlled according to the power coefficient corresponding to the final power-consumption level. For example, on the maximum power-consumption level, the power coefficient for controlling the power-consuming device is the rated power coefficient P2. For another example, on the standard power-consumption level, the power coefficient for controlling the power-consuming device is $P=P2-0.5\times\Delta P$. For still another example, on the economic power-consumption level, the power coefficient for controlling the power-consuming device is the lowest power consumption power P1. Therefore, on the condition of ensuring that the power-consuming device can satisfy a demand, a power of power consumption of a device is adjusted according to a power consumption demand, and power consumption of the power-consuming device of the whole vehicle is reduced.

Therefore, an operating mode can be determined more comprehensively, during driving, an engine can be enabled to operate in an economic zone as much as possible, thereby reducing comprehensive fuel consumption, and when an electric quantity is insufficient, power consumption of the power-consuming device of the whole vehicle is reduced, the economic zone of the engine is adjusted for BSG power generation, and a power maintaining capacity can be enhanced.

In conclusion, according to the power consumption control method of a hybrid electric vehicle provided by this embodiment of this disclosure, a current slope, a current throttle depth, and a current operating power of power-consuming device of the hybrid electric vehicle are obtained, a current power-consumption level of the hybrid electric vehicle is determined according to the current slope, the current throttle depth, and the current operating power of the power-consuming device, a current power-generation level of the hybrid electric vehicle is obtained, then a final power-consumption level of the hybrid electric vehicle is controlled according to the current power-consumption level and the current power-generation level, and power consumption of the hybrid electric vehicle is controlled according to the final power-consumption level. Hence, in the power consumption control method of this embodiment of this disclosure, the final power-consumption level is determined according to the current slope, the current throttle depth, the current power of the power-consuming device, and the current power-generation level of the hybrid electric vehicle, and then, the power-consuming device is adjusted according to the final power-consumption level, so that power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

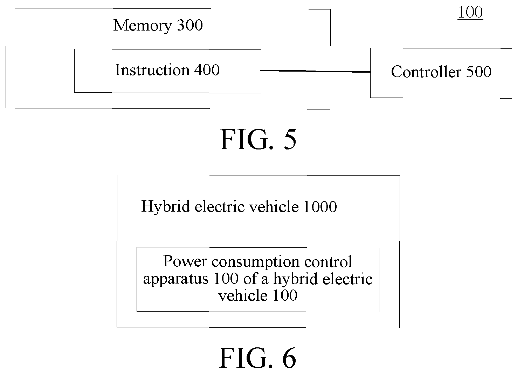

Fig. 5 is a schematic block diagram of a power consumption control apparatus of a hybrid electric vehicle according to an embodiment of this disclosure. As shown in Fig. 5, a power consumption control apparatus 100 of a hybrid electric vehicle of this embodiment of this disclosure includes a controller 500 and a memory 300, where the memory 300 stores a plurality of instructions 400, and the instructions 400 are loadable and executable by the controller 500 to: obtain a current slope, a current throttle depth, and a current operating power of power-consuming device of the hybrid electric vehicle, and determine a current power consumption level of the hybrid electric vehicle according to the current slope, the current throttle depth, and the current operating power of the power-consuming device; obtain a current power-generation level of the hybrid electric vehicle, control a final power-consumption level of the hybrid electric vehicle according to the current power-consumption level and the current power-generation level, and control power consumption of the hybrid electric vehicle according to the final power-consumption level, where the hybrid electric vehicle has a plurality of power-generation levels and a plurality of power-consumption levels, and the plurality of power-generation levels respectively correspond to the plurality of power-consumption levels.

According to an embodiment of this disclosure, the controller 500 further performs: obtaining a slope interval to which the current slope belongs, and obtaining a slope power-consumption level corresponding to the slope interval to which the current slope belongs; obtaining a throttle-depth interval to which the current throttle depth belongs, and obtaining a throttle-depth power-consumption level corresponding to the throttle-depth interval to which the current throttle depth belongs; obtaining a power interval to which the current operating power of the power-consuming device belongs, and obtaining a power power-consumption level corresponding to the power interval to which the current operating power of the power-consuming device belongs; and using a highest level in the slope power-consumption level, the throttle-depth power-consumption level, and the power power-consumption level as the current power-consumption level.

According to an embodiment of this disclosure, the controller 500 further performs: when the current power-generation level is lower than the current power-consumption level, and the current power-consumption level is inconsistent with the slope power-consumption level, using a power-consumption level corresponding to the current power-generation level as the final power-consumption level; and when the current power-generation level is lower than the current power-consumption level, and the current power-consumption level is consistent with the slope power-consumption level, using the slope power-consumption level as the final power-consumption level.

According to an embodiment of this disclosure, the controller 500 further performs: when the current power-generation level higher than or equal to the current power-consumption level, using the current power-consumption level as the final power-consumption level.

According to an embodiment of this disclosure, the controller 500 further performs: selecting a corresponding throttle depth-target motor torque curve according to the final power-consumption level, obtaining a current target motor torque according to the current throttle depth and a corresponding throttle depth-target motor torque curve, and controlling an output torque of a power motor of the hybrid electric vehicle according to the current target motor torque, where the hybrid electric vehicle has a plurality of throttle depth-target motor torque curves, and the plurality of power-consumption levels respectively correspond to the plurality of throttle depth-target motor torque curves.

According to an embodiment of this disclosure, proportions of the target motor torques of the plurality of throttle depth-target motor torque curves to a total driving torque at a same throttle depth gradually decrease according to a descending order of the plurality of power-consumption levels.

According to an embodiment of this disclosure, the controller 500 further performs: obtaining a lowest power consumption power and a rated power consumption power of the power-consuming device, obtaining a bias power according to a difference between the rated power consumption power and the lowest power consumption power, selecting a corresponding power coefficient according to the final power-consumption level, and adjusting an operating power of the power-consuming device according to the rated power consumption power, the bias power, and the corresponding power coefficient, where the hybrid electric vehicle has a plurality of power coefficients, and the plurality of power-consumption levels respectively correspond to the plurality of power coefficients.

According to an embodiment of this disclosure, the controller 500 further performs: adjusting the operating power of the power-consuming device according to the following formula:

$$P = P2 - a \times \triangle P$$

where P is an adjusted operating power of the power-consuming device, P2 is the rated power consumption power, a is the power coefficient, and $\triangle P$ is the bias power.

According to an embodiment of this disclosure, the plurality of power coefficients gradually increase according to a descending order of the plurality of power-consumption levels.

In conclusion, according to the power consumption control apparatus of a hybrid electric vehicle provided by this embodiment of this disclosure, a current slope, a current throttle depth, and a current operating power of power-consuming device of the hybrid electric vehicle are obtained, a current power-consumption level of the hybrid electric vehicle is determined according to the current slope, the current throttle depth, and the current operating power of the power-consuming device, a current power-generation level of the hybrid electric vehicle is obtained, a final power-consumption level of the hybrid electric vehicle is controlled according to the current power-consumption level and the current power-generation level, and power consumption of the hybrid electric vehicle is controlled according to the final power-consumption level, where the hybrid electric vehicle has a plurality of power-generation levels and a plurality of power-consumption levels, and the plurality of power-generation levels respectively correspond to the plurality of power-consumption levels. Hence, in the power consumption control apparatus of a hybrid electric vehicle of this embodiment of this disclosure, the final power-consumption level is determined according to the current slope, the current throttle depth, the current power of the power-consuming device, and the current power-generation level of the hybrid electric vehicle, and then, the power-consuming device is adjusted according to the final power-consumption level, so that power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

The embodiments of this disclosure further provide a hybrid electric vehicle.

Fig. 6 is a schematic block diagram of a hybrid electric vehicle according to an embodiment of this disclosure. As shown in Fig. 6, a hybrid electric vehicle 1000 includes the power consumption control apparatus 100 of a hybrid electric vehicle.

According to the hybrid electric vehicle of this embodiment of this disclosure, through the power consumption control apparatus of the hybrid electric vehicle, power consumption of a whole vehicle can be controlled in more comprehensive operating modes, and the engine is enabled to operate in an economic zone as much as possible during driving, thereby reducing comprehensive fuel consumption, and power consumption of the whole vehicle can also be reduced to the largest extent, thereby improving a power maintaining capacity.

In the descriptions of this disclosure, it should be understood that orientation or position relationships indicated by the terms, such as "central", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are based on orientation or position relationships shown in the accompanying drawings, and are used only for ease of describing this disclosure and simplifying the descriptions, rather than indicating or implying that the mentioned apparatus or component needs to have a particular orientation or needs to be constructed and operated in a particular orientation. Therefore, such terms should not be construed as limiting of this disclosure.

In addition, terms "first" and "second" are only used to describe the objective and cannot be understood as indicating or implying relative importance or implying a quantity of the indicated technical features. Therefore, features defined by "first" and "second" may explicitly or implicitly include at least one of the features. In the description of this disclosure, unless otherwise specifically defined, "a plurality of" means two or more, for example, two or three.

In this disclosure, unless otherwise explicitly specified or defined, the terms such as "mount", "install", "connect", "connection", and "fix" should be understood in a broad sense. For example, the connection may be a fixed connection, a detachable connection, or an integral connection; or the connection may be a mechanical connection or an electrical connection; or unless otherwise explicitly defined. The connection may be a direct connection, an indirect connection through an intermediary medium, or internal communication between two components. A person of ordinary skill in the art may understand the specific meanings of the foregoing terms in this disclosure according to specific situations.

In this disclosure, unless otherwise explicitly specified or defined, the first feature being located "above" or "below" the second feature may be the first feature being in direct contact with the second feature, or the first feature being in indirect contact with the second feature through an intermediary medium. In addition, the first feature being located "above" the second feature may be the first feature being located directly above or obliquely above the second feature, or may simply indicate that the first feature is higher in level than the second feature. The first feature being located "below" the second feature may be the first feature being located directly below or obliquely below the second feature, or may simply indicate that the first feature is lower in level than the second feature.

Throughout the description of this specification, the description of the reference terms, such as "an embodiment", "some embodiments", "example", "specific example", or "some examples" means that the specific features, structures, materials, or characteristics, described with reference to the embodiment or example are included in at least one embodiment or example of this disclosure. In this specification, schematic descriptions of the foregoing terms are not necessarily directed at a same embodiment or example. In addition, the described specific features, structures, materials, or features can be combined in a proper manner in any one or more embodiments or examples. In addition, in a case that is not mutually contradictory, a person skilled in the art can combine or group different embodiments or examples that are described in this specification and features of the different embodiments or examples.

Although the embodiments of this disclosure are shown and described above, it can be understood that, the foregoing embodiments are exemplary, and cannot be construed as a limitation to this disclosure. Within the scope of this disclosure, a person of ordinary skill in the art may make changes, modifications, replacement, and variations to the foregoing embodiments.

## Claims

1. A power consumption control method of a hybrid electric vehicle, comprising the following steps:

   obtaining a current slope, a current throttle depth, and a current operating power of power-consuming device of the hybrid electric vehicle, and determining a current power-consumption level of the hybrid electric vehicle according to the current slope, the current throttle depth, and the current operating power of the power-consuming device;
   obtaining a current power-generation level of the hybrid electric vehicle, wherein the hybrid electric vehicle has a plurality of power-generation levels and a plurality of power-consumption levels, and the plurality of power-generation levels respectively correspond to the plurality of power-consumption levels; and
   controlling a final power-consumption level of the hybrid electric vehicle according to the current power-consumption level and the current power-generation level, and controlling power consumption of the hybrid electric vehicle according to the final power-consumption level.

**2.** The power consumption control method of a hybrid electric vehicle according to claim 1, wherein the determining a current power-consumption level of the hybrid electric vehicle according to the current slope, the current throttle depth, and the current operating power of the power-consuming device comprises:

obtaining a slope interval to which the current slope belongs, and obtaining a slope power-consumption level corresponding to the slope interval to which the current slope belongs;
obtaining a throttle-depth interval to which the current throttle depth belongs, and obtaining a throttle-depth power-consumption level corresponding to the throttle-depth interval to which the current throttle depth belongs;
obtaining a power interval to which the current operating power of the power-consuming device belongs, and obtaining a power power-consumption level corresponding to the power interval to which the current operating power of the power-consuming device belongs; and
using a highest level in the slope power-consumption level, the throttle-depth power-consumption level, and the power power-consumption level as the current power-consumption level.

**3.** The power consumption control method of a hybrid electric vehicle according to claim 2, wherein
when the current power-generation level is lower than the current power-consumption level, and the current power-consumption level is inconsistent with the slope power-consumption level, using a power-consumption level corresponding to the current power-generation level as the final power-consumption level; and
when the current power-generation level is lower than the current power-consumption level, and the current power-consumption level is consistent with the slope power-consumption level, using the slope power-consumption level as the final power-consumption level.

**4.** The power consumption control method of a hybrid electric vehicle according to any one of claims 1 to 3, wherein when the current power-generation level higher than or equal to the current power-consumption level, using the current power-consumption level as the final power-consumption level.

**5.** The power consumption control method of a hybrid electric vehicle according to any one of claims 1 to 4, wherein the controlling power consumption of the hybrid electric vehicle according to the final power-consumption level comprises:

selecting a corresponding throttle depth-target motor torque curve according to the final power-consumption level, wherein the hybrid electric vehicle has a plurality of throttle depth-target motor torque curves, and the plurality of power-consumption levels respectively correspond to the plurality of throttle depth-target motor torque curves; and
obtaining a current target motor torque according to the current throttle depth and a corresponding throttle depth-target motor torque curve, and controlling an output torque of a power motor of the hybrid electric vehicle according to the current target motor torque.

**6.** The power consumption control method of a hybrid electric vehicle according to claim 5, wherein proportions of the target motor torques of the plurality of throttle depth-target motor torque curves to a total driving torque at a same throttle depth gradually decrease according to a descending order of the plurality of power-consumption levels.

**7.** The power consumption control method of a hybrid electric vehicle according to any one of claims 1 to 6, wherein the controlling power consumption of the hybrid electric vehicle according to the final power-consumption level comprises:

obtaining a lowest power consumption power and a rated power consumption power of the power-consuming device;
obtaining a bias power according to a difference between the rated power consumption power and the lowest power consumption power;
selecting a corresponding power coefficient according to the final power-consumption level, wherein the hybrid electric vehicle has a plurality of power coefficients, and the plurality of power-consumption levels respectively correspond to the plurality of power coefficients; and
adjusting an operating power of the power-consuming device according to the rated power consumption power, the bias power, and the corresponding power coefficient.

**8.** The power consumption control method of a hybrid electric vehicle according to claim 7, wherein the operating power of the power-consuming device is adjusted according to the following formula:

$$P=P2-a\times\triangle P$$

wherein P is an adjusted operating power of the power-consuming device, P2 is the rated power consumption power, a is the power coefficient, and $\triangle P$ is the bias power.

9. The power consumption control method of a hybrid electric vehicle according to claim 8, wherein the plurality of power coefficients gradually increase according to a descending order of the plurality of power-consumption levels.

10. A power consumption control apparatus of a hybrid electric vehicle, comprising a controller and a memory, wherein the memory stores a plurality of instructions, and the instructions are loadable and executable by the controller to:

obtaining a current slope, a current throttle depth, and a current operating power of power-consuming device of the hybrid electric vehicle, and determining a current power-consumption level of the hybrid electric vehicle according to the current slope, the current throttle depth, and the current operating power of the power-consuming device; and
obtain a current power-generation level of the hybrid electric vehicle, control a final power-consumption level of the hybrid electric vehicle according to the current power-consumption level and the current power-generation level, and control power consumption of the hybrid electric vehicle according to the final power-consumption level, wherein the hybrid electric vehicle has a plurality of power-generation levels and a plurality of power-consumption levels, and the plurality of power-generation levels respectively correspond to the plurality of power-consumption levels.

11. The power consumption control apparatus of a hybrid electric vehicle according to claim 10, wherein the controller further performs:

obtaining a slope interval to which the current slope belongs, and obtaining a slope power-consumption level corresponding to the slope interval to which the current slope belongs;
obtaining a throttle-depth interval to which the current throttle depth belongs, and obtaining a throttle-depth power-consumption level corresponding to the throttle-depth interval to which the current throttle depth belongs;
obtaining a power interval to which the current operating power of the power-consuming device belongs, and obtaining a power power-consumption level corresponding to the power interval to which the current operating power of the power-consuming device belongs; and
using a highest level in the slope power-consumption level, the throttle-depth power-consumption level, and the power power-consumption level as the current power-consumption level.

12. The power consumption control apparatus of a hybrid electric vehicle according to claim 11, wherein the controller further performs:
when the current power-generation level is lower than the current power-consumption level, and the current power-consumption level is inconsistent with the slope power-consumption level, using a power-consumption level corresponding to the current power-generation level as the final power-consumption level; and when the current power-generation level is lower than the current power-consumption level, and the current power-consumption level is consistent with the slope power-consumption level, using the slope power-consumption level as the final power-consumption level.

13. The power consumption control apparatus of a hybrid electric vehicle according to any one of claims 10 to 12, wherein the controller further performs:
when the current power-generation level higher than or equal to the current power-consumption level, using the current power-consumption level as the final power-consumption level.

14. The power consumption control apparatus of a hybrid electric vehicle according to any one of claims 10 to 13, wherein the controller further performs:
selecting a corresponding throttle depth-target motor torque curve according to the final power-consumption level, obtaining a current target motor torque according to the current throttle depth and a corresponding throttle depth-target motor torque curve, and controlling an output torque of a power motor of the hybrid electric vehicle according to the current target motor torque, wherein the hybrid electric vehicle has a plurality of throttle depth-target motor torque curves, and the plurality of power-consumption levels respectively correspond to the plurality of throttle depth-target motor torque curves.

**EP 3 677 483 A1**

15. The power consumption control apparatus of a hybrid electric vehicle according to claim 14, wherein proportions of the target motor torques of the plurality of throttle depth-target motor torque curves to a total driving torque at a same throttle depth gradually decrease according to a descending order of the plurality of power-consumption levels.

16. The power consumption control apparatus of a hybrid electric vehicle according to any one of claims 10 to 15, wherein the controller further performs:
obtaining a lowest power consumption power and a rated power consumption power of the power-consuming device, obtaining a bias power according to a difference between the rated power consumption power and the lowest power consumption power, selecting a corresponding power coefficient according to the final power-consumption level, and adjusting an operating power of the power-consuming device according to the rated power consumption power, the bias power, and the corresponding power coefficient, wherein the hybrid electric vehicle has a plurality of power coefficients, and the plurality of power-consumption levels respectively correspond to the plurality of power coefficients.

17. The power consumption control apparatus of a hybrid electric vehicle according to claim 16, wherein the controller further performs:

adjusting the operating power of the power-consuming device according to the following formula:

$$P=P2-a\times\triangle P$$

wherein P is an adjusted operating power of the power-consuming device, P2 is the rated power consumption power, a is the power coefficient, and ∆P is the bias power.

18. The power consumption control apparatus of a hybrid electric vehicle according to claim 17, wherein the plurality of power coefficients gradually increase according to a descending order of the plurality of power-consumption levels.

19. A hybrid electric vehicle, comprising:
the power consumption control apparatus of a hybrid electric vehicle according to any one of claims 10 to 18.

**16**

<u>200</u>

FIG. 1

FIG. 2a

FIG. 2b

200

| First electrical device 10 | Low-voltage Storage battery 20 |

DC4

| DC-DC converter 4 |

DC3

| Power battery 3 |

| Second electrical device 30 |

DC1

| First controller 51 |

Secondary motor 5

DC2

| Second controller 21 |

Power motor 2

| Engine 1 | Clutch 6 | Wheel 7 |

## FIG. 3

Obtain a current slope, a current throttle depth, and a current operating power of power-consuming device of the hybrid electric vehicle, and determine a current power consumption level of the hybrid electric vehicle according to the current slope, the current throttle depth, and the current operating power of the power-consuming device — S1

Obtain a current power-generation level of the hybrid electric vehicle, where the hybrid electric vehicle has a plurality of power-generation levels and a plurality of power-consumption levels, and the plurality of power-generation levels respectively correspond to the plurality of power-consumption levels — S2

Control a final power-consumption level of the hybrid electric vehicle according to the current power-consumption level and the current power-generation level, and control power consumption of the hybrid electric vehicle according to the final power-consumption level — S3

## FIG. 4

Memory 300

Instruction 400

Controller 500

100

FIG. 5

Hybrid electric vehicle 1000

Power consumption control apparatus 100 of a hybrid electric vehicle 100

FIG. 6

## INTERNATIONAL SEARCH REPORT

| International application No. |
|---|
| **PCT/CN2018/108540** |

### A. CLASSIFICATION OF SUBJECT MATTER

B60W 20/00(2016.01)i;  B60W 20/12(2016.01)i

According to International Patent Classification (IPC) or to both national classification and IPC

### B. FIELDS SEARCHED

Minimum documentation searched (classification system followed by classification symbols)

B60W20

Documentation searched other than minimum documentation to the extent that such documents are included in the fields searched

Electronic data base consulted during the international search (name of data base and, where practicable, search terms used)

CNABS, CNTXT, CNKI, 超星, CHAOXING: 混合动力, 混动, 汽车, 用电控制, 用电等级, 级别, 坡度, 油门, 深度, 开度, 工作功率, 发电, 电机, 电动机, 扭矩, 偏差, 额定功率; VEN, JPTXT, USTXT, EPTXT: HYBRID, vehicle, regenerat+, control, power, degree, battery, motor, engine, charging, grade, torque, accelero+, deviation+.

### C. DOCUMENTS CONSIDERED TO BE RELEVANT

| Category* | Citation of document, with indication, where appropriate, of the relevant passages | Relevant to claim No. |
|---|---|---|
| X | CN 106379313 A (TIANJIN SANTROLL ELECTRIC AUTOMOBILE TECHNOLOGY CO., LTD.) 08 February 2017 (2017-02-08) <br> description, paragraphs 3-11 and 17-24, and figures 1-4 | 1-4 |
| Y | CN 106379313 A (TIANJIN SANTROLL ELECTRIC AUTOMOBILE TECHNOLOGY CO., LTD.) 08 February 2017 (2017-02-08) <br> description, paragraphs 3-11 and 17-24, and figures 1-4 | 10-13, 19 |
| Y | CN 101445044 A (BYD COMPANY LIMITED) 03 June 2009 (2009-06-03) <br> description, page 34, paragraphs 2-3 | 10-13, 19 |
| A | EP 2990284 A1 (MITSUBISHI MOTORS CORP.) 02 March 2016 (2016-03-02) <br> entire document | 1-19 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2018** | **21 December 2018** |

| Name and mailing address of the ISA/CN | Authorized officer |
|---|---|
| **State Intellectual Property Office of the P. R. China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2018/108540** |

| Patent document cited in search report | | | Publication date (day/month/year) | Patent family member(s) | | | Publication date (day/month/year) |
|---|---|---|---|---|---|---|---|
| CN | 106379313 | A | 08 February 2017 | None | | | |
| CN | 101445044 | A | 03 June 2009 | CN | 101445044 | B | 21 March 2012 |
| EP | 2990284 | A1 | 02 March 2016 | JP | 2016043910 | A | 04 April 2016 |
| | | | | US | 9688265 | B2 | 27 June 2017 |
| | | | | CN | 105383482 | A | 09 March 2016 |
| | | | | US | 2016059844 | A1 | 03 March 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710911851